# EUROPEAN PATENT SPECIFICATION

(11) **EP 3 351 971 B1**
(45) Date of publication and mention of the grant of the patent: **08.05.2024**
(21) Application number: 16845968.3
(22) Date of filing: 16.09.2016
(51) Int. Cl.: G01T 3/06, G01T 1/20, C09K 11/77

(54) **SCINTILLATOR ARRAY**
SZINTILLATORARRAY
RÉSEAU SCINTILLANT

(30) Priority: 18.09.2015 JP 2015185490
(43) Date of publication of application: 25.07.2018
(73) Proprietor: Kabushiki Kaisha Toshiba, Minato-ku Tokyo 105-8001 (JP); Toshiba Materials Co., Ltd., Isogo-Ku Yokohama-Shi Kanagawa 235-8522 (JP)
(72) Inventor: FUKUTA, Yukihiro, Tokyo 105-8001 (JP); ADACHI, Yoshitaka, Tokyo 105-8001 (JP); NAKASHIMA, Nobuaki, Tokyo 105-8001 (JP); NITTOH, Koichi, Yokohama-shi Kanagawa 235-8523 (JP)
(74) Representative: Hoffmann Eitle
(86) International application number: PCT/JP2016/004247
(87) International publication number: WO 2017/047094

(56) References cited:
- EP-A1- 1 550 885
- EP-A1- 2 733 189
- WO-A1-2014/080816
- JP-A- H04 290 985
- JP-A- 2012 225 680
- JP-A- 2012 225 680
- JP-B2- S 574 258
- KR-A- 20110 115 432

## Description

### FIELD

Embodiments described herein generally relate to a scintillator array.

### BACKGROUND

Conventionally, there have been proposed various neutron detectors (neutron two-dimensional detectors) used for neutron radiography, neutron imaging, neutron scattering experiments, and the like. Further, at present, in all the countries of the world, for basic experiments related to physical property research and atomic nuclei of various substances, construction of new high-intensity pulsed neutron sources is in progress.

As a commonly-used neutron detector, for example, there have been known a He-3 gas detector using 3He (hereinafter, mentioned as He-3.) gas which is an isotope of He (helium) and having high detection efficiency and a scintillation detector including a scintillator which reacts with neutrons directly or secondarily to emit light.

Because a neutron has no electric charge, a neutron converter which converts neutrons into charged particles, gamma rays, or the like is required for detecting the neutrons. As the neutron converter, there have been known He-3, Li-6, B-10, Cd-113, Gd-155, and Gd-157 having a large neutron absorption cross section, but at present, the He-3 gas detector which is a neutron detector using the He-3 gas is used due to low sensitivity to gamma rays. In order to efficiently detect fast neutrons and epithermal neutrons (also known as epithermal) having high energy, there also has been studied a structure in which a circumference of a neutron detector is covered with a neutron moderator such as polyethylene.

The scintillation detector has a high counting capacity. However, density is high and sensitivity to gamma rays is high due to a solid body. In order to detect neutrons at a high counting rate, it is essential to use a neutron detection scintillator having a short fluorescence lifetime. Therefore, for example, a neutron detector using a scintillator constituted of a Li₂B₄O₇ single crystal for neutron detection and having a combination of its fluorescent property and a photomultiplier tube is under development. Further, particularly regarding a reduction in influence of gamma rays which is essential for the neutron detection or the neutron imaging, a scintillator constituted of light elements is preferable, and because Li, B, and O are the light elements, the scintillator constituted of the Li₂B₄O₇ single crystal satisfies a demand also in terms of the above.

Furthermore, a neutron scintillator which is capable of having a configuration thinner compared with a conventional neutron scintillator and is more excellent in terms of gamma-ray sensitivity and position resolution compared with a conventional Li-based scintillator is under development. This is produced by, using a neutron scintillator formed into glass by adding Ce to an oxide constituted of B and Li as main components as a starting raw material, mixing Li₂B₄O₇ and CeO₂, thereafter heating the mixture at temperatures of at least 950°C or higher and holding it for one hour or longer, and thereafter cooling it at a rate of 150°C/sec or more between temperatures of 800 and 400°C.

In LiBO₃ and L₁₂B₄O₇ compounds constituted of only these light elements having low gamma-ray sensitivity, light emission by neutrons is very small. Furthermore, in single crystals obtained by adding Ce to these, an amount of Ce solid-dissolving in the crystals is very small, the light emission by neutrons is small, and it is difficult to use them as a two-dimensional detector for neutron imaging or for neutron radiography.

On the other hand, in Li and B, scintillator materials can be selected regardless of the gamma-ray sensitivity because a several MeV charged particle production reaction is used for the neutron detection. In particular, because B can be expected to have neutron detection efficiency about four times of that of the same amount of Li, it is possible to produce a thinner scintillator. Because this is very advantageous in terms of the gamma-ray sensitivity and the position resolution, an ideal neutron converter is enabled. However, B has about half charged particle energy to be produced of that of commercially available Li glass (Li-Glass) and is considered disadvantageous in terms of light emission output, and in most of the conventional neutron scintillators, Li is used as a converter.

Here, as a representative of a currently practically used neutron scintillator, for example, LiF/ZnS is present. This neutron scintillator has a high light emission amount and is also excellent in handleability, but is opaque and has limitations to detection efficiency and counting capacity.

In particular, a resolution when high-definition imaging is performed depends on a spread in emitting light by putting a reactant and a scintillator together or a resolution of an optical system or an image sensor which images the light. Recently, the number of pixels of a charge coupled device (CCD) element or a CMOS element used for an imaging system has been increasing dramatically, and therefore a configuration of a reaction film and a scintillator is considered to mainly determine the resolution. That is, when a reaction with neutrons in the reaction film generates charged particles and the charged particles and the scintillator react with each other to emit light, a flying distance (range) of the charged particles and a diffusion length of light emitted in the scintillator cause a blur related to the resolution.

In order to improve the resolution, it is necessary to make the reaction film thin and make a range of secondary charged particles to be generated short. In a case of LiF/ZnS, Li reacts with neutrons to emit alpha (α) rays, and the α rays make a ZnS phosphor emit light. An actual configuration, in which LiF/ZnS is granular powder, has a LiF/ZnS powder held by an organic binder on an Al plate which is used as a substrate in many cases.

As Li which reacts with neutrons, an enriched isotope Li-6 is normally used in order to increase reaction efficiency. However, because an atom density with respect to all including the binder or the like is low, a thickness of a coated layer is about several hundreds µm. Therefore, the resolution is determined by the thickness of the coated layer and is not high. When energy of neutrons increases in particular, a rate of reaction with Li-6 decreases further, and efficiency also becomes poor. The layer is considered to be made thicker in order to increase the rate of reaction, but because LiF/ZnS is opaque and emitted light scatters in LiF/ZnS and is not transmitted, the efficiency does not increase even though the layer is made thicker.

As a method of solving the above, there has been proposed a two-dimensional detector in which a neutron detector is constituted of a capillary plate having a plurality of openings passing through in a thickness direction and filled with a liquid scintillator which reacts with neutrons in a plurality of these openings and an imaging detector, and which measures scintillation light. However, because the capillary plate portion does not react and the neutrons pass through this portion, high-definition and high-efficiency two-dimensional detector is not obtained. Further, it is also difficult in manufacturing to hold the scintillator uniformly in all holes of the capillary plate, which does not yet reach practical use.

Meanwhile, an imaging intensifier (or electron multiplier) which combines a reaction film and a scintillator, converts light from the scintillator into electrons by using a photoelectric conversion film, and amplifies the electrons is also under development in order to achieve high definition and increase sensitivity. However, in this structure, a thickness of the reaction film is about 5 µm for the purpose of high definition, and in a case of B-10, reaction efficiency with neutrons is about 10%, and remaining 90% of the neutrons is transmitted and is not used. Furthermore, when energy of neutrons increases, the reaction efficiency decreases further. Therefore, the reaction efficiency is poor despite high definition, and when the number of generated neutrons is small (flux is small), integration is to be performed by spending time.

As described above, in the neutron detector for performing imaging and detecting scattered neutrons two-dimensionally with high definition and high sensitivity in a non-destructive manner by using neutrons and transmitting conditions of substances and the inside of a structure, development of a neutron detector capable of detecting a high energy neutron region with high definition and high efficiency is desired in particular. JP H04-290985 A, KR 2011-0115432 A, and JP 2012-225680 A relate to prior art scintillators.

### SUMMARY

In one aspect of the present invention, it is one subject to provide a scintillator array to be used for a neutron detector capable of detecting high energy neutrons with high definition and high efficiency.

The invention is defined by claim 1.

### BRIEF DESCRIPTION OF THE DRAWINGS

FIG. 1 is a view illustrating a structure example of a scintillator array to be used for a neutron detector of an embodiment.
FIG. 2 is an enlarged view illustrating the structure example of the scintillator array to be used for the neutron detector in FIG. 1.
FIG. 3 is an enlarged view illustrating a structure example of a scintillator array to be used for a neutron detector according to another embodiment.
FIG. 4 is an enlarged view illustrating a structure example of a scintillator array to be used for a neutron detector according to the other embodiment.
FIG. 5 is a view illustrating a structure example of a scintillator array to be used for a conventional neutron detector.
FIG. 6 is a view illustrating a structure example of a scintillator array to be used for a conventional neutron detector.
FIG. 7 is a chart illustrating a relationship between a thickness and a transmittance of thermal neutrons.
FIG. 8 is a chart illustrating a relationship between neutron energy and a neutron absorption cross section.

### RELEVANT REFERENCES

### Patent Reference

Patent Reference 1: Re-publication of PCT International Publication No. WO 2008/132849 A1

### DETAILED DESCRIPTION

Hereinafter, embodiments of a scintillator array to be used for a neutron detector according to the present invention will be described referring to the drawings.

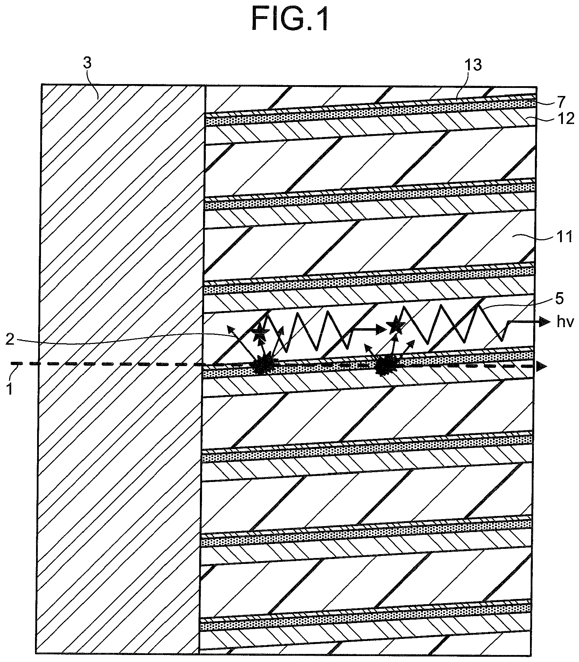

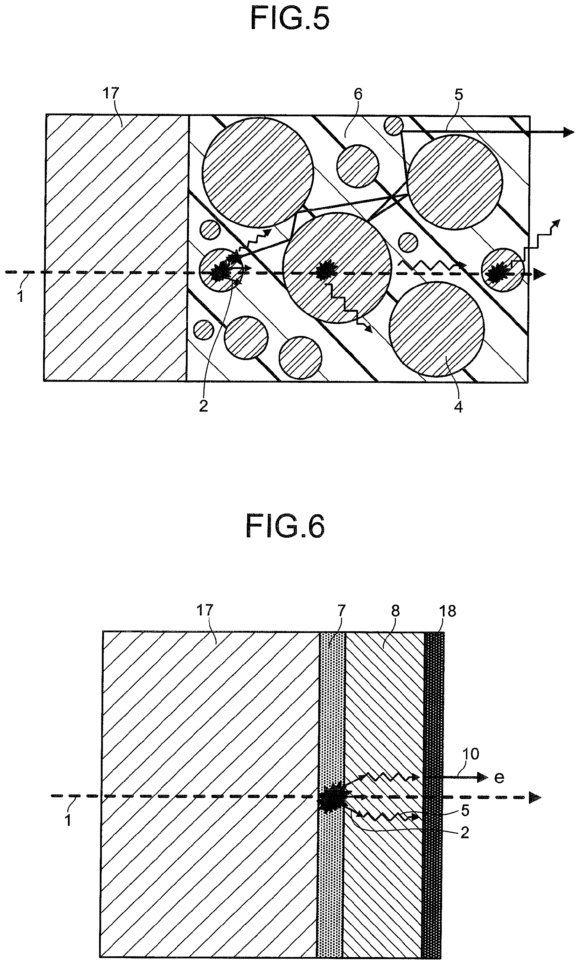

FIG. 1 is a view illustrating a structure example of a scintillator array to be used for a neutron detector according to one embodiment of the present invention. Further, FIG. 5 and FIG. 6 are views illustrating structure examples of scintillator arrays to be used for conventional neutron detectors.

The scintillator array to be used for the conventional neutron detector illustrated in FIG. 5 has granular scintillators 4 (for example, LiF/ZnS phosphors). The granular scintillators 4 are provided with an aluminum substrate 17 composed of aluminum (a material which easily transmits neutrons) and a transparent binder 6 provided for efficiently transmitting an emitted light 5 while fixing the granular scintillators 4 which become a structure. The granular scintillators 4 are fixed on the aluminum substrate 17 with the binder 6 to constitute the scintillator array to be used for the neutron detector.

A basic mechanism of neutron detection is as follows. A neutron (n) 1 is transmitted through the aluminum substrate 17 and reacts with Li of the granular scintillators 4. Strictly speaking, Li is an isotope of Li-6, and this Li-6 and the neutron (n) 1 react with each other to emit alpha (α) rays 2. This reaction is mentioned as (n, α). The emitted α rays 2 make a ZnS phosphor of the granular scintillators 4 emit the light 5.

The α rays 2 are emitted in all directions in the granular scintillators 4 and have a range (a flying distance of radiation rays) of a degree of about 5 µm to 10 µm. A value of a particle size of the granular scintillators 4 is substantially the same as a value of the range of these α rays 2, and the light 5 emitted inside the granular scintillators 4 is absorbed and attenuated in the granular scintillators 4 and comes out of the granular scintillators 4 at the same time. This light 5 is transmitted in other granular scintillators 4 and reflects on the granular scintillators 4, and further is transmitted in the binder 6 and comes out of the neutron detector. When a proportion of the number of atoms of a Li-6 atom to react with neutrons which is occupied in all the granular scintillators 4 is considered as LiF/ZnS which is a ratio of LiF to ZnS, LiF/ZnS is 1/4, and when the number of atoms of the binder 6 is taken into consideration, the whole reaction efficiency becomes poor.

Accordingly, in order to increase the efficiency, it is necessary to make a thickness of a coated portion of the granular scintillators 4 thick. However, because the light 5 emitted in a region of the granular scintillators 4 on a side on which the neutron 1 is incident is transmitted in the granular scintillators 4 and reflects on the granular scintillators 4, and further is transmitted in the binder 6 and comes out of the neutron detector, a transmittance of light decreases, and because it diffuses further to be transmitted, resolution also becomes poor.

Scintillators which are used for imaging actually and have this configuration have a thickness of about several hundreds µm. In a fast neutron whose energy of a neutron is high, a reaction cross section with Li-6 is several digits smaller than a reaction cross section with Li-6 in a thermal neutron. Therefore, because the thickness is to be increased further in order to increase the reaction efficiency, the resolution becomes poorer and poorer.

As a method of increasing the resolution to obtain bright images with high luminance, a method illustrated in FIG. 6 is practically used. In this method, for a reactant with neutrons, B-10 (a thermal neutron cross section: 3838 barns) four times as large as Li-6 (a thermal neutron cross section: 940 barns) in a thermal neutron cross section is used. Further, a proportion of the number of atoms to react is also 4/5 in a film 7. Moreover, because the film 7 is formed by vapor deposition without using a binder, a proportion of B-10 existing in unit volume is also large, which allows the efficiency to be increased even though a thickness is small.

However, also in B-10, similarly to Li-6, a range of the α rays 2 emitted by a (n, α) reaction is a degree of about 4 to 5 µm, and therefore when the thickness is more than 5 µm, the α rays 2 emitted on an incident side by a reaction with a neutron 1 cannot pass through the film 7 and reach a CsI phosphor 8. When the thickness of the film 7 is 5 µm, looking overall, about 80% of thermal neutrons is transmitted and only a degree of about 20% of the thermal neutrons is effectively utilized. However, an atom density per unit volume in a reaction surface is higher compared with a case of the configuration in FIG. 5, and the reaction film of about 5 µm allows high-definition imaging.

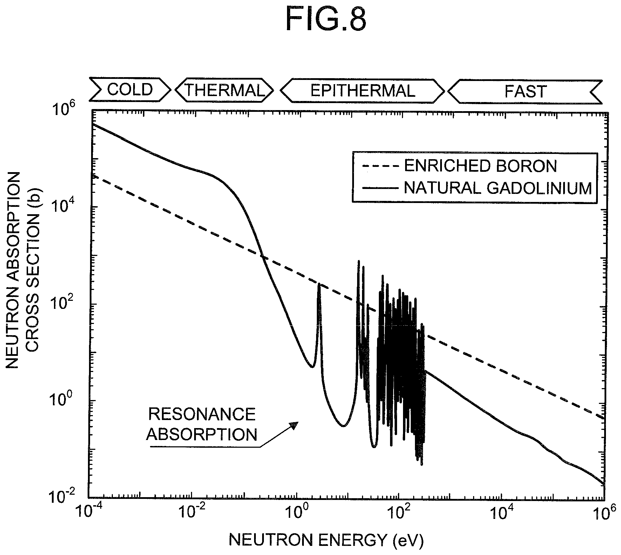

The needle-shaped CsI phosphor 8 having high transparency sheds the light 5 in accordance with the α rays 2, and the photoelectric conversion film 18 generates an electron 10 in accordance with the light 5. Amplification of this electron increases efficiency of conversion and transmission and makes it possible to obtain sensitivity about 100 or more times compared with a case of photographing by using an image sensor as the configuration illustrated in FIG. 5. However, as illustrated in FIG. 8 having a vertical axis representing a neutron absorption cross section and a horizontal axis representing neutron energy, in a case of a high energy neutron (fast neutron), the neutron absorption cross section is two digits smaller compared with that of a thermal neutron, and therefore a rate of reaction is extremely low.

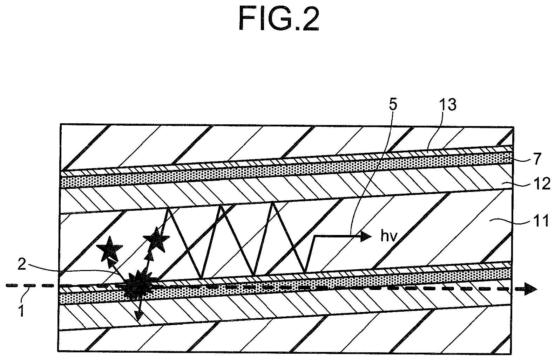

Next, a configuration of a scintillator array to be used for a neutron detector according to one embodiment of the present invention will be described referring to FIGs. 1 and 2.

FIGs. 1 and 2 are views illustrating a structure example of a detection part of the scintillator array to be used for the neutron detector according to an embodiment of the present invention. The scintillator array illustrated in FIG. 1 is provided with a substrate 3 which is a ceramic substrate composed of white ceramics such as AlN (aluminum nitride) or a silicon single crystal substrate so as to be located on an incident side of a neutron 1. Adjacently to this substrate 3, a multi-layered structure in which each layer extends along an incident direction of the neutron 1 is constituted.

This multi-layered structure has a multi-layered structure having stacks in which a layered structure constituted of a film 12 which is a ceramic film composed of the white ceramics such as AlN (aluminum nitride) or a silicon single-crystal film, the film 7 which is ¹⁰B₄C (enriched boron carbide obtained by enriching a boron-10 isotope) vapor-deposition film, a film 13 which is a ceramic vapor-deposition film composed of the white ceramics such as AlN (aluminum nitride) or an Al (aluminum) vapor-deposition film, and a scintillator 11 is layered repeatedly in multistage (for example, several hundreds to several thousands stages) in a first embodiment. This multi-layered structure is alternately arranged in a double-cross shape (grid shape) so that a difference in lamination direction becomes 90 degrees when it is seen from an incident surface side of the neutron 1, and thus the detection part (two-dimensional neutron reaction scintillator) of the scintillator array which has a two-dimensionally expanding neutron incident surface and is used for the neutron detector is constituted.

The film 12 has a thickness (a length in an upper and lower direction in FIGs. 1 and 2) of 5 µm or more. The film 12 extends along the incident direction of the neutron 1. The film 12 acts as a reflector which reflects light.

The film 7 is formed on the film 12 by the vapor deposition and extends along the incident direction of the neutron 1. The film 7 has a thickness (a length in the upper and lower direction in FIGs. 1 and 2) of about 4 to 5 µm, for example. In the film 7, boron-10 reacts with the neutron 1 to emit radiation rays (α rays 2). The neutron is incident on the film 7 along a direction intersecting the lamination direction of the layered structure, for example.

The film 13 has a thickness (a length in the upper and lower direction in FIGs. 1 and 2) of about 0.1 µm to 0.5 µm. The film 13 is formed on the film 7 by the vapor deposition so as to be adjacent to the film 7. Accordingly, the film 13 also extends along the incident direction of the neutron 1. The film 13 acts as a reflector which reflects light.

The scintillator 11 is composed of a plastic scintillator or the like. The scintillator 11 is arranged adjacently to the film 13 so as to extend along the incident direction of the neutron 1. This scintillator 11 has a thickness (a length in the upper and lower direction in FIGs. 1 and 2) of 5 µm or more. The thickness of the scintillator 11 is about several tens µm to hundreds µm, for example. The scintillator 11 emits the light 5 by the α rays 2 emitted in the film 7.

The scintillator 11 also includes either type of a rare earth oxysulfide phosphor or garnet, and further includes at least one selected from praseodymium, terbium, europium, cerium, zirconium, and phosphorus as an activator in these.

A scintillator layer includes a material represented by a general formula Y₃Al₅O₁₂:Ce, a general formula Gd₃(Al, Ga)₅O₁₂:Ce, a general formula Lu₃(Al, Ga)₅O₁₂:Ce, a general formula Gd₃(Al, Ga)₅O₁₂:Tb, a general formula Lu₃(Al, Ga)₅O₁₂:Tb, or a general formula (Gd, Lu)₃(Al, Ga)₅O₁₂:Ce.

A large number of the above-described layered structures are layered further, thereby constituting the detection part of the scintillator array to be used for the neutron detector. In this embodiment, in the above-described layered structure, the respective layers such as the film 7 are each formed to have an inclination in the lamination direction with respect to the incident direction of the neutron 1, namely, formed to extend along a direction inclined with respect to a direction perpendicular to the substrate 3 and make a rear end side (a right side in the figures) rise toward an upper side in FIGs. 1 and 2.

As described above, the scintillator array to be used for the neutron detector of this embodiment has the scintillator array 11 sandwiched between the film 13 and the film 12. Further, the film 7 is also formed to be sandwiched by either of the film 13 and the film 12.

The film 7 is black and has low reflectance of light, and therefore when the film 7 and the scintillator 11 are layered directly, the light 5 emitted in the scintillator 11 cannot be efficiently transmitted. In contrast, making a sandwich structure in which the scintillator 11 is sandwiched by the film 13 and the film 12 as described in this embodiment makes it possible to efficiently transmit the light 5 emitted in the scintillator 11 by using reflection by the film 13 and the film 12 and take out the light 5 to the outside.

In the α rays 2 emitted by the (n, α) reaction at each point in the film 7, a component emitted in a direction (a 4 to 5 µm thickness direction) nearly perpendicular to the neutron 1 is emitted as the light 5 in the scintillator 11. The light 5 can be propagated while being reflected by the film 13 and the film 12 in the scintillator 11 having a high transparency, led to the outside of the multi-layered structure, and taken out.

The film 12 with a thickness of 5 µm or more absorbs the α rays 2 coming out downward in the film 7 in FIGs. 1 and 2 and hinders light emission in the scintillator 11 on a lower side. This makes position resolution improve.

In this embodiment, the film 7 is formed so as to extend along the incident direction of the neutron 1 as described above. Then, because the neutron 1 goes not perpendicularly to but nearly horizontally to this film 7, and so as to move on a diagonal line in the inclined arranged film 7, the reaction efficiency can be greatly improved.

As described above, the scintillator array to be used for the neutron detector according to this embodiment makes it possible to greatly improve use efficiency of neutrons and perform propagation of the emitted light 5 with efficiency and without diffusing the light. This makes it possible to obtain the scintillator array to be used for a two-dimensional detector with respect to neutrons which is capable of imaging efficiently with high definition.

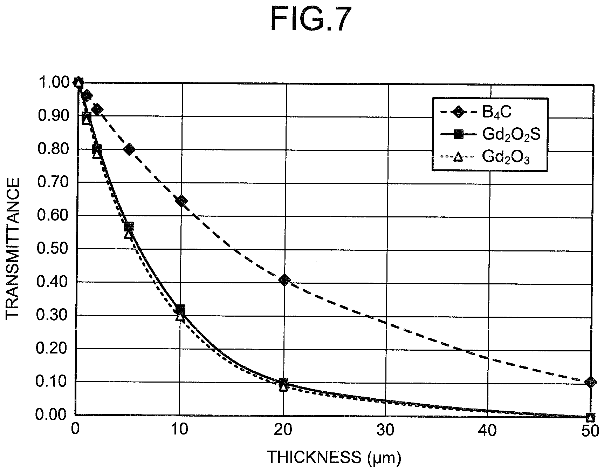

FIG. 7 is a chart illustrating a relationship between a thickness of a reaction material and a transmittance of thermal neutrons. In FIG. 7, a vertical axis represents the transmittance and a horizontal axis represents the thickness. As in FIG. 7, in a case of ¹⁰B₄C, when a thickness is 50 µm, a transmittance is about 10%. It is found from this that about 90% of thermal neutrons reacts. Accordingly, setting a length (a length in a left and right direction in FIGs. 1 and 2) of the film 7 to about 50 µm allows the reaction with about 90% of thermal neutrons.

Thus, the scintillator array of the embodiment is capable of high-definition and high-efficiency detection with respect to a wide range of energy of neutrons, particularly with respect to high energy thereof.

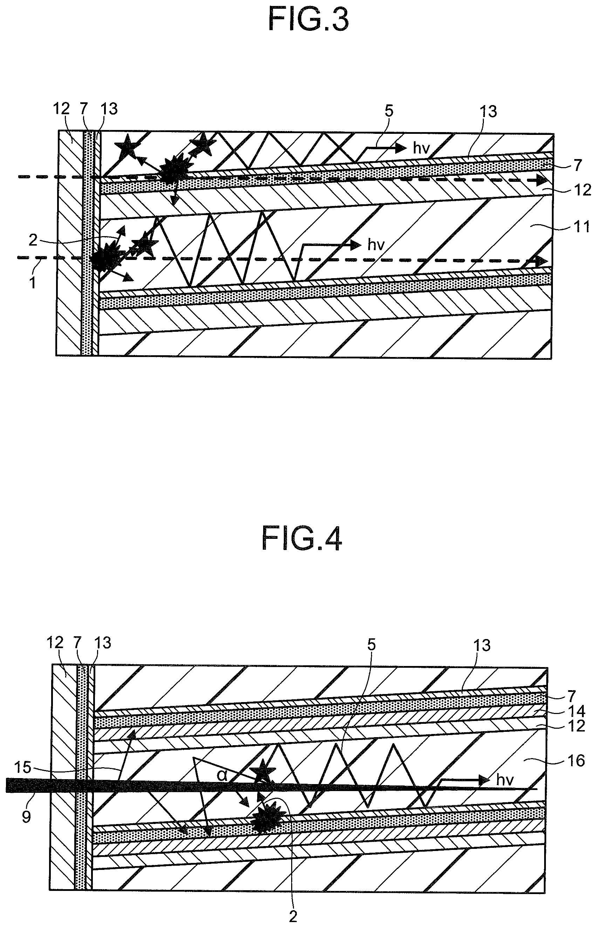

Next, a scintillator array to be used for a neutron detector according to a second embodiment will be described referring to FIG. 3. The scintillator array to be used for the neutron detector of this second embodiment includes a film 12 having a thickness of 5 µm or more, the film 7, and a film 13 for light reflection having a thickness of about 0.1 µm to 0.5 µm so as to extend along a neutron incident surface on a neutron incident side (a left side in FIG. 3). The films 12 and 13 function as reflective layers, and the film 7 functions as a neutron reaction layer which reacts with neutrons to emit radiation rays. Note that because other parts are constituted similarly to those in the first embodiment illustrated in FIGs. 1 and 2, the corresponding parts are denoted by the same reference signs and redundant descriptions are omitted.

The scintillator array to be used for the neutron detector of the second embodiment makes it possible to increase the reaction efficiency with a neutron 1 in a neutron input surface in addition to actions and effects in the neutron detector of the first embodiment. This makes it possible to make a size in a direction (a left and right direction in FIG. 3) in which neutrons in the neutron detector are transmitted short and compact.

Next, a scintillator array which is suitable for measurement of fast neutrons and is used for a neutron detector according to a third embodiment will be described referring to FIG. 4. The scintillator array to be used for the neutron detector of the third embodiment includes a film 7, a film 12 having a thickness (a length in an upper and lower direction in FIG. 4) of 5 µm or more, and a film 14 (a thickness of 5 µm or more) for absorbing thermal neutrons which is arranged between the film 7 and the film 12, and a scintillator 16 in place of the scintillator 11.

As the scintillator 16, for example, a plastic scintillator can be used. Further, when a glass scintillator, a polycrystalline scintillator, or a ceramic scintillator of a rare earth oxysulfide phosphor, garnet, or the like, which does not include hydrogen, is used as the scintillator 16, the scintillator is preferably covered with a resin including hydrogen. The scintillator array includes the film 12 having the thickness of 5 µm or more, the film 7, and a film 13 having a thickness of about 0.1 µm to 0.5 µm so as to extend along an incident surface of a neutron 1 on an incident side (a left side in FIG. 4) of the neutron 1. Note that because other parts are constituted similarly to those in the first embodiment illustrated in FIGs. 1 and 2, the corresponding parts are denoted by the same reference signs and redundant descriptions are omitted.

In the scintillator array which has the above-described configuration and is used for the neutron detector according to the third embodiment, a fast neutron 9 which is a neutron having a high energy component reacts in the film 7 to emit α rays 2, and these α rays 2 react in the scintillator 16 to be emitted as a light 5. However, in a (n, α) reaction in the film 7, when energy of neutrons increases, an absorption cross section declines in the order of digits as indicated by a line of a neutron absorption cross section of enriched boron illustrated in FIG. 8 having a vertical axis representing a neutron absorption cross section and a horizontal axis representing neutron energy. That is, a reaction probability (efficiency) becomes low. Therefore, there emerges a need to make a length (a length in a left and right direction in FIG. 3) of the film 7 longer than that in a case of a thermal neutron by the order of digits.

Therefore, attention is focused on hydrogen which scatters at an almost constant rate particularly with respect to the neutron energy in a reaction with neutrons, and in the third embodiment, the scintillator 16 is used and the fast neutron 9 is slowed down by hydrogen. Slowed-down neutrons 15 diffuse in an isotropic manner from the scintillator 16. The slowed-down neutrons 15 react in the film 7 on a lower side of the scintillator 16, the α rays 2 are emitted, and these α rays 2 react with the scintillator 16 to emit the light 5.

On the other hand, when the slowed-down neutrons 15 react in the film 7 on an upper side of the scintillator 16, the light 5 is emitted in the upper and lower scintillators 16, and therefore the resolution becomes poor. Accordingly, in order not to react with the film 7 on the upper side of the scintillator 16, a wraparound of the neutrons on the lower side can be prevented by providing the film 14 which is a Gd₂O₃ vapor-deposition film including gadolinium (Gd) having a large absorption cross section in a thermal neutron region under the film 7 on the upper side.

In the third embodiment as described above, particularly in the case of the high energy neutron, a reaction distance with the film 7 is long, and therefore the fast neutron 9 is converted into the slowed-down neutrons 15 by hydrogen atoms of the scintillator 16 and made to react with the film 7. Since the slowed-down neutrons 15 have a range of several centimeters or more and diffuse, the diffusing slowed-down neutrons 15 are absorbed by forming the film 14 (a thickness of about 5 µm to several tens µm) on one side (a lower side in FIG. 4) of the film 7. This makes it possible to improve the resolution of the detector while increasing the detection efficiency.

## Claims

1. A scintillator array comprising
a structure including a plurality of stacks layered onto each other,
wherein each of the stacks has in sequence:
a light reflector (12) including ceramics or single-crystal silicon;
a first film (7) consisting of enriched boron carbide including an enriched boron-10 isotope and configured to react with a neutron incident along a direction intersecting a lamination direction of the stacks and thus emit a radiation ray;
a second film (13) consisting of a white ceramics and configured to reflect light; and
a scintillator (11) configured to emit light (5) in response to the radiation ray.

2. The scintillator array according to claim 1, wherein the ceramics include an aluminum nitride.

3. The scintillator array according to claim 1, wherein the stacks are arranged so that the stacks has a difference of 90 degrees in a lamination direction of the light reflector (12), the first film (7), the second film (13), and the scintillator (11).

4. The scintillator array according to claim 1, wherein the scintillator (11) includes a rare earth oxysulfide phosphor or garnet.

5. The scintillator array according to claim 4, wherein the scintillator (11) further includes at least one element selected from praseodymium, terbium, europium, cerium, zirconium, and phosphorus.

6. The scintillator array according to claim 1, wherein the scintillator (11) includes a material represented by a formula Y₃Al₅O₁₂:Ce, a formula Gd₃(Al, Ga)₅O₁₂:Ce, a formula Lu₃(Al, Ga)₅O₁₂:Ce, a formula Gd₃(Al, Ga)₅O₁₂:Tb, a formula Lu₃(Al, Ga)₅O₁₂:Tb, or a formula (Gd, Lu)₃(Al, Ga)₅O₁₂:Ce.

7. The scintillator array according to claim 1, further comprising:
a first light reflection layer (13) having a first surface extending along a side surface of the structure;
a second light reflection layer (12) having a second surface extending along a side surface of the structure; and
a neutron reaction layer (7) provided between the first and second light reflection layers (13, 12) and configured to react with an incident neutron and thus emit a radiation ray.

8. The scintillator array according to claim 7, wherein each of the light reflector (12), the first film (7), the second film (13), and the scintillator (11) extends along a direction inclined with respect to a direction perpendicular to the first surface.

9. The scintillator array according to claim 1,
wherein the white ceramics consists of aluminum nitride.

10. The scintillator array according to claim 1, wherein each of the stacks further has a third film (14) configured to absorb a thermal neutron, the third film (14) being arranged between the light reflector (12) and the first film (7).

11. The scintillator array according to claim 10, wherein the third film includes a gadolinium oxide.

12. The scintillator array according to claim 1, wherein the scintillator (11) is a plastic scintillator including hydrogen atoms, or a scintillator including a glass scintillator or a polycrystalline scintillator, or a ceramic scintillator including a rare earth oxysulfide phosphor or garnet, which is sandwiched by a resin layer including hydrogen atoms and the resin layer.

## Patentansprüche

1. Szintillatoranordnung, umfassend
eine Struktur, die eine Vielzahl von übereinander geschichteten Stapeln enthält, wobei jeder der Stapel in Abfolge aufweist:
einen Lichtreflektor (12) aus Keramik oder einkristallinemSilizium;
einen ersten Film (7), der aus angereichertem Borkarbid besteht, das ein angereichertes Bor-10-Isotop enthält und so konfiguriert ist, dass er mit einem Neutron reagiert, das entlang einer Richtung einfällt, die eine Laminierungsrichtung der Stapel schneidet, und somit einen Strahlungs-Strahl aussendet;
eine zweite Folie (13), die aus einer weißen Keramik besteht und so konfiguriert ist, dass sie Licht reflektiert; und
einen Szintillator (11), der so konfiguriert ist, dass er als Reaktion auf den Strahlung-Strahl Licht (5) aussendet.

2. Szintillatoranordnung gemäß Anspruch 1, wobei die Keramik ein Aluminiumnitrid enthält.

3. Szintillatoranordnung gemäß Anspruch 1, wobei die Stapel so angeordnet sind, dass die Stapel einen Unterschied von 90 Grad in einer Laminierungsrichtung des Lichtreflektors (12), der ersten Folie (7), der zweiten Folie (13) und des Szintillators (11) aufweisen.

4. Szintillatoranordnung gemäß Anspruch 1, wobei der Szintillator (11) einen Seltenerd-Oxysulfid-Leuchtstoff oder Granat enthält.

5. Szintillatoranordnung gemäß Anspruch 4, wobei der Szintillator (11) ferner mindestens ein Element enthält, das aus Praseodym, Terbium, Europium, Cer, Zirconium und Phosphor ausgewählt ist.

6. Szintillatoranordnung gemäß Anspruch 1, wobei der Szintillator (11) ein Material enthält, das durch eine Formel Y₃Al₅O₁₂:Ce, eine Formel Gd₃ (Al, Ga) ₅O₁₂ : Ce, eine Formel Lu₃ (Al, Ga) ₅O₁₂:Ce, eine Formel Gd₃ (Al, Ga)₅O₁₂:Tb, eine Formel Lu₃ (Al, Ga) ₅O₁₂:Tb, oder eine Formel (Gd, Lu)₃(Al, Ga)₅O₁₂:Ce repräsentiert ist.

7. Szintillatoranordnung gemäß Anspruch 1, die weiter umfassend:
eine erste Lichtreflexionsschicht (13) mit einer ersten Oberfläche, die sich entlang einer Seitenfläche der Struktur erstreckt;
eine zweite Lichtreflexionsschicht (12) mit einer zweiten Oberfläche, die sich entlang einer Seitenfläche der Struktur erstreckt; und
eine Neutronenreaktionsschicht (7), die zwischen der ersten und der zweiten Lichtreflexionsschicht (13, 12) vorgesehen und so konfiguriert ist, dass sie mit einem einfallenden Neutron reagiert und somit einen Strahl emittiert.

8. Szintillatoranordnung gemäß Anspruch 7, wobei sich der Lichtreflektor (12), der erste Film (7), der zweite Film (13) und der Szintillator (11) jeweils entlang einer Richtung erstrecken, die in Bezug auf eine Richtung senkrecht zur ersten Oberfläche geneigt ist.

9. Szintillatoranordnung gemäß Anspruch 1,
wobei die weiße Keramik aus Aluminiumnitrid besteht.

10. Szintillatoranordnung gemäß Anspruch 1, wobei jeder der Stapel außerdem einen dritten Film (14) aufweist, der konfiguriert ist, ein thermisches Neutron zu absorbieren, wobei der dritte Film (14), zwischen dem Lichtreflektor (12) und der ersten Folie (7) angeordnet ist.

11. Szintillatoranordnung gemäß Anspruch 10, wobei der dritte Film ein Gadoliniumoxid enthält.

12. Szintillatoranordnung gemäß Anspruch 1, wobei der Szintillator (11) ein plastischer Szintillator ist, der Wasserstoffatome enthält, oder ein Szintillator, der einen Glasszintillator oder einen polykristallinen Szintillator enthält, oder ein keramischer Szintillator, der einen Seltenerd-Oxysulfid-Phosphor oder Granat enthält, der zwischen einer Polymerschicht, die Wasserstoffatome enthält, und der Polymerschicht eingeschlossen ist.

## Revendications

1. Réseau scintillant comprenant :
une structure incluant une pluralité de piles superposées,
dans lequel chaque pile présente dans l'ordre :
un réflecteur de lumière (12) incluant des céramiques ou du silicium monocristallin ;
un premier film (7) constitué de carbure de bore enrichi incluant un isotope de bore 10 enrichi et configuré pour réagir avec un neutron incident le long d'une direction coupant une direction de stratification des piles et pour émettre ainsi un rayon de radiation ;
un deuxième film (13) constitué d'une céramique blanche et configuré pour réfléchir la lumière ; et
un scintillateur (11) configuré pour émettre de la lumière (5) en réponse au rayon de radiation.

2. Réseau scintillant selon la revendication 1, dans lequel les céramiques incluent un nitrure d'aluminium.

3. Réseau scintillant selon la revendication 1, dans lequel les piles sont agencées de telle sorte que les piles présentent une différence de 90 degrés dans la direction de stratification du réflecteur de lumière (12), du premier film (7), du second film (13) et du scintillateur (11).

4. Réseau scintillant selon la revendication 1, dans lequel le scintillateur (11) inclut un phosphore oxysulfure de terres rares ou un grenat.

5. Réseau scintillant selon la revendication 4, dans lequel le scintillateur (11) inclut en outre au moins un élément sélectionné parmi le praséodyme, le terbium, l'europium, le cérium, le zirconium et le phosphore.

6. Réseau scintillant selon la revendication 1, dans lequel le scintillateur (11) inclut un matériau représenté par une formule Y₃Al₅O₁₂:Ce, une formule Gd₃(Al, Ga)₅O₁₂:Ce, une formule Lu₃(Al, Ga)₅O₁₂:Ce, une formule Gd₃(Al, Ga)₅O₁₂:Tb, une formule Lu₃(Al, Ga)₅O₁₂:Tb, ou une formule (Gd, Lu)₃(Al, Ga)₅O₁₂:Ce.

7. Réseau scintillant selon la revendication 1, comprenant en outre :
une première couche de réflexion de lumière (13) présentant une première surface s'étendant le long d'une surface latérale de la structure ;
une deuxième couche de réflexion de lumière (12) présentant une deuxième surface s'étendant le long d'une surface latérale de la structure ; et
une couche de réaction neutronique (7) prévue entre les première et deuxième couches de réflexion de la lumière (13, 12) et configurée pour réagir avec un neutron incident et émettre ainsi un rayon de radiation.

8. Réseau scintillant selon la revendication 7, dans lequel le réflecteur de lumière (12), le premier film (7), le deuxième film (13) et le scintillateur (11) s'étendent chacun le long d'une direction inclinée par rapport à une direction perpendiculaire à la première surface.

9. Réseau scintillant selon la revendication 1,
dans lequel la céramique blanche est constituée de nitrure d'aluminium.

10. Réseau scintillant selon la revendication 1, dans lequel chacune des piles présente en outre un troisième film (14) configuré pour absorber un neutron thermique, le troisième film (14) étant agencé entre le réflecteur de lumière (12) et le premier film (7).

11. Réseau scintillant selon la revendication 10, dans lequel le troisième film inclut un oxyde de gadolinium.

12. Réseau scintillant selon la revendication 1, dans lequel le scintillateur (11) est un scintillateur plastique incluant des atomes d'hydrogène, ou un scintillateur incluant un scintillateur en verre ou un scintillateur polycristallin, ou un scintillateur en céramique incluant un phosphore oxysulfure de terres rares ou un grenat, qui est enserré par une couche de résine incluant des atomes d'hydrogène et la couche de résine.
